# EUROPEAN PATENT APPLICATION

(11) **EP 1 457 929 A2**
(43) Date of publication of application: **15.09.2004**
(21) Application number: 04250542.0
(22) Date of filing: 02.02.2004
(51) Int. Cl.: G07B 17/00

(54) **Mail item handling system and method**

(30) Priority: 31.01.2003 GB 0302320
(71) Applicant: NEOPOST INDUSTRIE SA, F-92220 Bagneux (FR)
(72) Inventor: Boden, Keith McMurray, Reigate, Surrey RH2 0LA (GB)
(74) Representative: Boden, Keith McMurray

(57) **Abstract**

An item handling system and method, the system comprising: a remote data center including a database of registered credit payment means, each registered credit payment means having at least one registered delivery address assigned thereto; and an item printing station for at least printing postage indicia for items, the printing station comprising a user interface for enabling user input, a communications unit for providing for remote communication with the data center, and a printing unit for printing at least postage indicia for items; wherein details representative of credit payment means being utilized by a third party in payment for goods to be delivered to a specified address are input via the user interface, the communications unit, in response to such input, is operative to query the data center to allow for confirmation of the specified address as a registered delivery address for the credit payment means, and, where the specified address is a registered delivery address, the printing unit is operative to at least print a postage indicium on an item for delivery of the goods.

## Description

The present invention relates to an item handling system and method, in particular a postage metering system and method for at least printing postage indicia for mail items.

In relation to the delivery of items requiring payment by credit payment means, typically a credit or debit card, existing postage metering systems do not provide for the authentication of the addressee details. As such, it is possible that a third party, where using the credit payment means of another party, could fraudulently obtain the delivery of items by addressing the items to his/her address.

It is an aim of the present invention to provide an item handling system and method, in particular a postage metering system and method which authenticates the addressee details to which items are to be delivered, thereby providing a measure of security against the improper delivery of items.

In one aspect the present invention provides an item handling system, comprising: a remote data center including a database of registered credit payment means, each registered credit payment means having at least one registered delivery address assigned thereto; and an item printing station for at least printing postage indicia for items, the printing station comprising a user interface for enabling user input, a communications unit for providing for remote communication with the data center, and a printing unit for printing at least postage indicia for items; wherein details representative of credit payment means being utilized by a third party in payment for goods to be delivered to a specified address are input via the user interface, the communications unit, in response to such input, is operative to query the data center to allow for confirmation of the specified address as a registered delivery address for the credit payment means, and, where the specified address is a registered delivery address, the printing unit is operative to print at least print a postage indicium on an item for delivery of the goods.

In one embodiment details representative of the credit payment means and the specified address are input via the user interface, and the data center is operative to return a validation message where the specified address is a registered delivery address.

Preferably, the validation message includes an address designator which designates the delivery address, and the printing unit is operative to print a machine-readable code on the item using the address designator which designates the delivery address.

In another embodiment the data center is operative to return any registered delivery addresses for the credit payment means, thereby allowing for selection of a registered delivery address where matching the specified address.

In one embodiment details representative of the credit payment means and the specified address are input via the user interface, and, where the specified address corresponds to a registered delivery address, only the corresponding registered delivery address is presented.

In one embodiment the printing unit is operative to print a postage indicium and the delivery address on the item.

In one embodiment the data center is operative to return an address designator for each registered delivery address, and the printing unit is operative to print a machine-readable code on the item using the address designator which designates the delivery address.

Preferably, the credit payment means comprises a credit or debit card.

In another aspect the present invention provides a method of handling items, comprising the steps of: providing a data center including a database of registered credit payment means, each registered credit payment means having at least one registered delivery address assigned thereto; receiving details from a third party of credit payment means being utilized in payment for goods to be delivered to a specified address; querying the data center to confirm the specified address as a registered delivery address for the credit payment means, wherein details representative of the credit payment means are provided with the query; and, where the specified address is a registered delivery address, printing at least a postage indicium on an item for delivery of the goods.

In one embodiment, in the querying step, details representative of the credit payment means and the specified address are provided with the query; and the method further comprises the step of: the data center returning a validation message where the specified address is a registered delivery address.

Preferably, the validation message includes an address designator which designates the delivery address, and, in the printing step, a machine-readable code is printed on the item using the address designator which designates the delivery address.

In another embodiment the method further comprises the step of: the data center returning any registered delivery addresses for the credit payment means, thereby allowing for selection of a registered delivery address where matching the specified address.

In one embodiment, in the querying step, details representative of the credit payment means and the specified address are provided with the query, and, where the specified address corresponds to a registered delivery address, only the corresponding registered delivery address is presented.

In one embodiment, in the printing step, a postage indicium and the delivery address are printed on the item.

In one embodiment, in the data center returning step, an address designator is returned for each registered delivery address, and, in the printing step, a machine-readable code is printed on the item using the address designator which designates the delivery address.

Preferably, the credit payment means comprises a credit or debit card.

Preferred embodiments of the present invention will now be described hereinbelow by way of example only with reference to the accompanying drawings, in which:
Figure 1 illustrates a postage metering system in accordance with a first embodiment of the present invention;
Figure 2 illustrates a postage metering system in accordance with a second embodiment of the present invention; and
Figure 3 represents the registered address details as returned for an exemplary credit payment means in operation of the postage metering system of Figure 2.

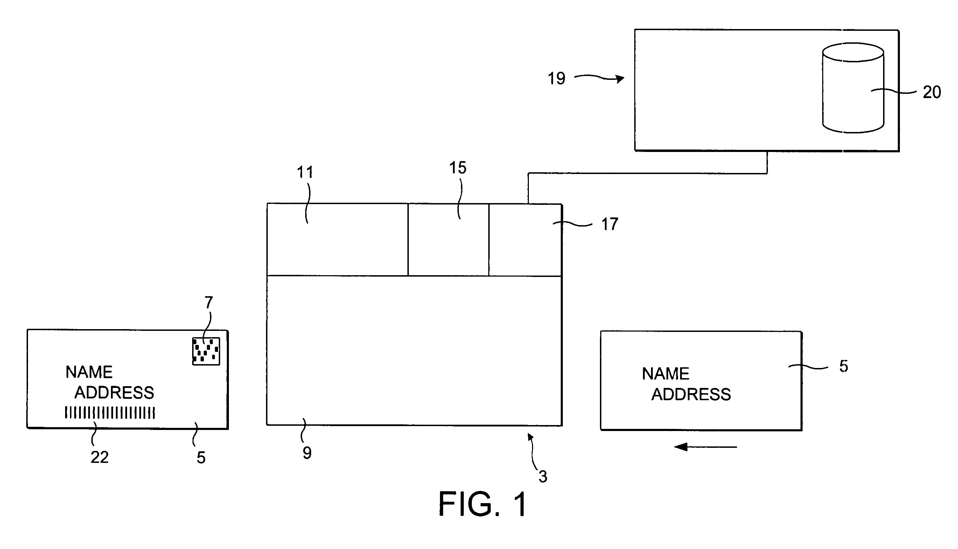

Figure 1 illustrates a postage metering system in accordance with a first embodiment of the present invention.

The postage metering system comprises at least one mail printing station 3 for printing mail items 5, either directly or indirectly through labelling, with at least postage indicia 7 which include postage information, such as postage value and addressee and sender details. In this embodiment the postage indicia 7 are two-dimensional matrices, typically as specified by digital indicia standards as defined by postal authorities, such as the IBIP standard. In a preferred embodiment the postage indicia 7 are cryptographically encoded, such as by encryption or digital signature.

The mail printing station 3 comprises a printing unit 9 for printing mail items 5 with at least postage indicia 7, a control unit 11, in this embodiment a microprocessor-based control unit, for controlling the printing unit 9 and performing accounting functions, and a user interface 15, including a display and keypad, for enabling user control of the mail printing station 3.

The mail printing station 3 further comprises a communications unit 17 for providing for communication with a remote data center 19, as will be described in more detail hereinbelow.

The data center 19 includes a database 20 of registered users. For each registered user and credit payment means assigned thereto, where the credit payment means is typically a credit or debit card, the database 20 includes a home address as a primary address to which mail items 5 are usually delivered and optionally at least one alternative delivery address to which mail items 5 can validly be delivered, with the home address and any alternative delivery addresses being pre-registered.

In operation, where a transaction request is received from a third party, typically remotely, such as a telephone request, for the delivery of goods to a specified address, the system operator inputs details at least representative of both the credit payment means for the transaction, typically the account number, and the specified address, for example, the post/zip code, via the user interface 15, and the communications unit 17 queries the data center 19.

Where no registered addresses are assigned to the credit payment means or the credit payment means is not registered for the specified address, the data center 19 returns a warning message. In this event, the transaction does not proceed.

Where the specified address matches one of the registered delivery addresses, the data center 19 returns a validation message and the transaction proceeds, with the system operator having the knowledge that the delivery address is a registered address.

With this configuration, the postage metering system provides that goods are despatched only to a registered delivery address, as a postage indicium 7 can only be printed for a mail item 5, which contains the goods, where the specified address matches a registered delivery address.

In one embodiment, as in this embodiment, a validation message as received from the data center 19 includes an address designator which designates the delivery address, and the printing unit 9 is configured to print a machine-readable code 22, typically a one-dimensional barcode, on the mail item 5 using the address designator as obtained from the data center 19. The provision of the machine-readable code 22 facilitates subsequent handling of the mail item 5 by mail processing equipment, and also provides an additional measure of security as the machine-readable code 22 is derived from an authenticated record.

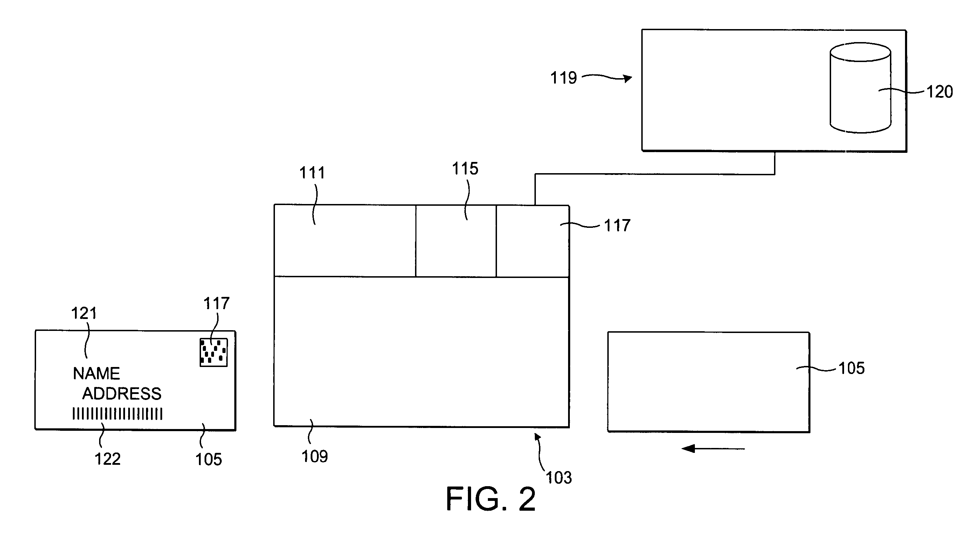

Figure 2 illustrates a postage metering system in accordance with a second embodiment of the present invention.

The postage metering system comprises at least one mail printing station 103 for printing mail items 105, either directly or indirectly through labelling, with postage indicia 107 which include postage information, such as postage value and addressee and sender details, and delivery address information. In this embodiment the postage indicia 107 are two-dimensional matrices, typically as specified by digital indicia standards as defined by postal authorities, such as the IBIP standard. In a preferred embodiment the postage indicia 107 are cryptographically encoded, such as by encryption or digital signature.

The mail printing station 103 comprises a printing unit 109 for printing mail items 105 with postage indicia 107 and delivery address information, a control unit 111, in this embodiment a microprocessor-based control unit, for controlling the printing unit 109 and performing accounting functions, and a user interface 115, including a display and keypad, for enabling user control of the mail printing station 103.

The mail printing station 103 further comprises a communications unit 117 for providing for communication with a remote data center 119, as will be described in more detail hereinbelow.

The data center 119 includes a database 120 of registered users. For each registered user and credit payment means assigned thereto, where the credit payment means is typically a credit or debit card, the database 120 includes a home address as a primary address to which mail items 105 are usually delivered and optionally at least one alternative delivery address to which mail items 105 can validly be delivered, with the home address and any alternative delivery addresses being pre-registered.

In operation, where a transaction request is received from a third party, typically remotely, such as a telephone request, for the delivery of goods to a specified address, the system operator inputs details at least representative of the credit payment means for the transaction, typically the account number, via the user interface 115, and the communications unit 117 queries the data center 119 for the registered address details for the credit payment means.

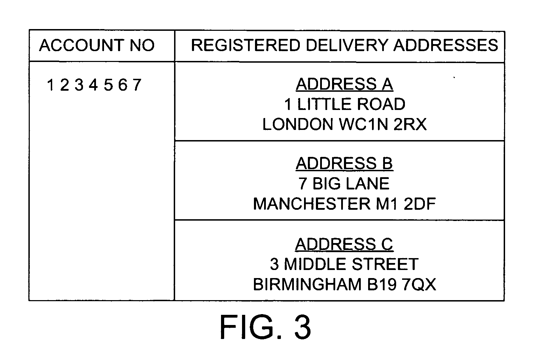

In this embodiment the data center 119 returns any registered delivery addresses for the credit payment means, and the registered delivery addresses are presented to the system operator via the user interface 115. Figure 3 represents the registered address details, in this embodiment three registered addresses A, B, C, as returned for an exemplary credit payment means, having account number 1234567.

Where the delivery address specified by the third party corresponds to a registered address, the system operator selects the registered address, in response to which the transaction proceeds and the printing unit 109 prints a postage indicium 107 and the selected delivery address 121 on the mail item 105.

In one embodiment, as in this embodiment, the address details returned by the data center 119 include an address designator for each delivery address, and the printing unit 109 is configured to print a machine-readable code 122, typically a one-dimensional barcode, on the mail item 105 using the address designator for the selected delivery address. The provision of the machine-readable code 122 facilitates subsequent handling of the mail item 105 by mail processing equipment, and also provides an additional measure of security as the machine-readable code 122 is derived from an authenticated record.

Where no registered addresses are assigned to the credit payment means or the credit payment means is not registered for the specified address, the data center 119 returns a warning message. In this event, the transaction does not proceed.

With this configuration, the postage metering system provides that goods are despatched only to a registered delivery address, as a postage indicium 107 can only be printed for a mail item 105, which contains the goods, where the specified address matches a registered delivery address.

In one embodiment, when querying the data center 119, the system operator can input details at least representative of the specified address, for example, the post/zip code, via the user interface 115. Where such address details are input, and the specified address corresponds to a registered address for the credit payment means, only that registered delivery address is presented to the system operator via the user interface 115.

Finally, it will be understood that the present invention has been described in its preferred embodiments and can be modified in many different ways without departing from the scope of the invention as defined by the appended claims.

For example, although the embodied mail item handling system has been illustrated for ease of understanding as including only one mail item printing station 3, 103, in other embodiments the mail item handling system can include any number of mail item printing stations 3, 103.

## Claims

1. An item handling system, comprising:
a remote data center including a database of registered credit payment means, each registered credit payment means having at least one registered delivery address assigned thereto; and
an item printing station for at least printing postage indicia for items, the printing station comprising a user interface for enabling user input, a communications unit for providing for remote communication with the data center, and a printing unit for printing at least postage indicia for items;
wherein details representative of credit payment means being utilized by a third party in payment for goods to be delivered to a specified address are input via the user interface, the communications unit, in response to such input, is operative to query the data center to allow for confirmation of the specified address as a registered delivery address for the credit payment means, and, where the specified address is a registered delivery address, the printing unit is operative to print a postage indicium on an item for delivery of the goods.

2. The system of claim 1, wherein details representative of the credit payment means and the specified address are input via the user interface, and the data center is operative to return a validation message where the specified address is a registered delivery address.

3. The system of claim 2, wherein the validation message includes an address designator which designates the delivery address, and the printing unit is operative to print a machine-readable code on the item using the address designator which designates the delivery address.

4. The system of claim 1, wherein the data center is operative to return any registered delivery addresses for the credit payment means, thereby allowing for selection of a registered delivery address where matching the specified address.

5. The system of claim 4, wherein details representative of the credit payment means and the specified address are input via the user interface, and, where the specified address corresponds to a registered delivery address, only the corresponding registered delivery address is presented.

6. The system of claim 4 or 5, wherein the printing unit is operative to print a postage indicium and the delivery address on the item.

7. The system of any of claims 4 to 6, wherein the data center is operative to return an address designator for each registered delivery address, and the printing unit is operative to print a machine-readable code on the item using the address designator which designates the delivery address.

8. The system of any of claims 1 to 7, wherein the credit payment means comprises a credit or debit card.

9. A method of handling items, comprising the steps of:
providing a data center including a database of registered credit payment means, each registered credit payment means having at least one registered delivery address assigned thereto;
receiving details from a third party of credit payment means being utilized in payment for goods to be delivered to a specified address;
querying the data center to confirm the specified address as a registered delivery address for the credit payment means, wherein details representative of the credit payment means are provided with the query; and
where the specified address is a registered delivery address, printing a postage indicium on an item for delivery of the goods.

10. The method of claim 9, wherein, in the querying step, details representative of the credit payment means and the specified address are provided with the query; and
further comprising the step of:
the data center returning a validation message where the specified address is a registered delivery address.

11. The method of claim 10, wherein the validation message includes an address designator which designates the delivery address, and, in the printing step, a machine-readable code is printed on the item using the address designator which designates the delivery address.

12. The method of claim 9, further comprising the step of:
the data center returning any registered delivery addresses for the credit payment means, thereby allowing for selection of a registered delivery address where matching the specified address.

13. The method of claim 12, wherein, in the querying step, details representative of the credit payment means and the specified address are provided with the query, and, where the specified address corresponds to a registered delivery address, only the corresponding registered delivery address is presented.

14. The method of claim 12 or 13, wherein, in the printing step, a postage indicium and the delivery address are printed on the item.

15. The method of any of claims 12 to 14, wherein, in the data center returning step, an address designator is returned for each registered delivery address, and, in the printing step, a machine-readable code is printed on the item using the address designator which designates the delivery address.

16. The method of any of claims 9 to 15, wherein the credit payment means comprises a credit or debit card.
